# EUROPÄISCHE PATENTSCHRIFT

(11) **EP 3 173 675 B1**
(45) Veröffentlichungstag und Bekanntmachung des Hinweises auf die Patenterteilung: **06.05.2020**
(21) Anmeldenummer: 16200580.5
(22) Anmeldetag: 24.11.2016
(51) Int. Cl.: F16L 33/22

(54) **SCHLAUCHANSCHLUSS**
HOSE CONNECTION
RACCORD DE TUYAU

(30) Priorität: 30.11.2015 DE 202015106514 U
(43) Veröffentlichungstag der Anmeldung: 31.05.2017
(73) Patentinhaber: Alfons Markert + Co. GmbH, 24539 Neumünster (DE)
(72) Erfinder: Wichelmann, Kai, 25575 Beringstedt (DE)
(74) Vertreter: Jaeschke, Rainer

(56) Entgegenhaltungen:
- EP-A1- 1 835 220
- EP-A1- 2 093 470
- DE-B- 1 252 984
- FR-A- 941 688

## Beschreibung

Die Erfindung betrifft eine Schlauchanbindung mit einem Anschlussteil, einer Spannhülse und einer Überwurfmutter, die die Spannhülse in der montierten Lage zumindest teilweise umgibt und mit dieser zusammenwirkt derart, dass bei der Drehung der Überwurfmutter in eine Richtung die Spannhülse den Schlauch mit dem Anschlussteil dichtend verbindet, welches Anschlussteil einen Rohrstutzen aufweist, der in ein Anschlussstück des Anschlussteils mündet und auf dessen freies Ende der anzubindende Schlauch aufsteckbar ist.

Es ist bekannt und erforderlich, Schläuche an Anschlussteile anzubinden, um eine dichte Verbindung herzustellen. Die Anschlussteile können an ihrer Anschlussseite beispielsweise einen Anschlussflansch, ein Schweißende oder einen Tri-Clamp-Anschluss aufweisen. Dadurch kann eine dichte Verbindung auf der Anschlussseite auch bei höheren Betriebsdrücken bereitgestellt werden.

Schlauchseitig ist es bekannt, das Schlauchende über einen Rohrstutzen des Anschlussteils zu führen und den Schlauch auf dem Rohrstutzen mit einer Schlauchanbindung klemmend zu halten. Die US 5,558,375 A zeigt eine solche Schlauchanbindung, bei welcher eine Klemmhülse in die Überwurfmutter eingelegt wird und dort klemmend gehalten ist. Anschließend wird der Schlauch eingeführt und die Überwurfmutter an dem Anschlussteil festgeschraubt. Hier besteht die Gefahr, dass die Klemmhülse beim Einführen des Schlauchs wieder aus der Überwurfmutter herausgeschoben wird. Die dichte und feste Montage ist entsprechend aufwändig.

Aus der EP 1 841 998 B1 ist es bekannt, das Schlauchende auf dem Rohrstutzen mit einer Klemmhülse zu halten, die mit einer Überwurfmutter zusammengepresst wird, so dass der Schlauch sich dichtend an den Rohrstutzen anlegt. Die Klemmhülse weist dabei ein Innengewinde auf, mit dem die Klemmhülse auf den Rohrstutzen aufgeschraubt ist. Die Klemmhülse weist ferner ein Außengewinde auf, auf das die Überwurfmutter aufgeschraubt wird, wodurch die Klemmhülse zusammengedrückt wird und den Schlauch fest auf dem Rohrstutzen hält. Die Klemmhülse weist daher ein Innengewinde und ein Außengewinde auf und ist entsprechend aufwändig herzustellen und zu montieren.

Aus der FR 941.688 ist eine Schlauchanbindung mit einem Anschlussteil, einer Spannhülse und einer Überwurfmutter bekannt, wobei die Spannhülse aus separaten Zungen bestehen kann, die von einer ringförmigen Feder zusammengehalten werden.

Der Erfindung liegt die Aufgabe zugrunde, eine Schlauchanbindung der eingangs geschilderten Art so auszubilden, dass eine leichtere Herstellung und eine leichtere Montage möglich sind. Auch sollen zumindest Teile der Schlauchanbindung wiederverwendbar sein.

Die Aufgabe wird gemäß der Erfindung nach Anspruch 1 gelöst.

Damit besteht die Schlauchanbindung aus drei Teilen, die in einfacher Weise hergestellt und zusammengesetzt werden können. Weiterhin wird die Spannhülse verliersicher aber lösbar an dem Anschlussteil gehalten. Sie kann daher ohne weiteres ausgetauscht werden.

Zunächst wird die Spannhülse mit dem Haltabschnitt auf das Anschlussteil aufgeklippt, so dass sie in axialer Richtung festgehalten ist. Weiterhin wird die Überwurfmutter auf das Schlauchende aufgesteckt. Dann wird das Schlauchende in den Zwischenraum zwischen Rohrstutzen und Klemmabschnitt der Spannhülse eingeschoben. Anschließend wird- die Überwurfmutter auf das Anschlussteil aufgeschraubt, wodurch die Spannhülse mit ihrem Klemmabschnitt fest auf die äußere Oberfläche des Schlauchs drückt und diesen dichtend auf den Rohrstutzen hält.

Gemäß der Erfindung sind der Halteabschnitt und der Klemmabschnitt über einen ringförmigen Verbindungsabschnitt miteinander verbunden. Im Längsschnitt ist die Spannhülse somit in etwa H-förmig ausgebildet, wobei die Schenkel des Halteabschnitts kürzer sein können als die des Klemmabschnitts. Durch Zusammendrücken des Klemmabschnitts vor der Montage der Spannhülse wird der Halteabschnitt elastisch etwas aufgeweitet, so das er einfach über den ihm zugeordneten Haltevorsprung des Anschlussteils geschoben werden kann.

Weiterhin sieht die Erfindung vor, dass der Klemmabschnitt und der Halteabschnitt mehrere in Umfangsrichtung nebeneinander liegende und sich von dem Verbindungsabschnitt weg erstreckende Klemmzungen beziehungsweise Haltezungen aufweisen. Zwischen benachbarten Haltezungen und zwischen benachbarten Klemmzungen sind somit axial verlaufende Spalte vorhanden. Der nach innen weisende Rastfortsatz des Haltabschnitts ist dementsprechend unterteilt und jeweils an den äußeren freien Enden der Haltezungen angeordnet.

Es können beispielsweise zwei, drei oder mehrere Halte- oder Klemmzungen entlang dem Umfang vorhanden sein. Auch kann vorgesehen werden sein, den Halteabschnitt und/oder den Klemmabschnitt mit nur einem axialen Spalt zu versehen. Der betreffende Abschnitt hat dann einen ringförmigen Querschnitt mit einer Lücke. In allen Fällen wird die Flexibilität des Halteabschnitts und des Klemmabschnitts erhöht. Insbesondere können die Klemmzungen gut über dem Schlauchende zusammengedrückt werden.

Dabei ist es günstig, wenn sich die axialen Spalte zwischen den Klemmabschnitten und/oder den Halteabschnitten im Verbindungsbereich zum Verbindungsabschnitt erweitern. Ein Einreißen der Spannhülse im Bereich der Verbindungstelle zwischen den Haltezungen oder der Klemmzungen und dem Verbindungabschnitt wird damit zuverlässig verhindert. Auch wird die Flexibilität der Haltezungen und Klemmzungen weiter erhöht.

Das Außengewinde des Anschlussteils kann auf einem zumindest teilweise umlaufenden radialen Gewindevorsprung des Anschlussteils angeordnet sein. Damit kann der Außendurchmesser des Außengewindes größer sein als der Außendurchmesser der Spannhülse, so dass die Überwurfmutter aufgeschraubt werden kann. Auch wird durch diesen Gewindevorsprung und bei aufgeschraubter Überwurfmutter die Spannhülse und das Schlauchende überdeckt, so dass diese geschützt vor äußeren Einflüssen bleiben.

Weiterhin ist vorgesehen, dass zwischen dem Gewindevorsprung und dem radial nach außen weisenden Haltevorsprung des Anschlussteils ein axialer Abstand vorhanden ist, der größer ist als die axiale Länge des radial nach innen weisenden Rastfortsatzes der Spannhülse. Damit wird ein sicheres Einrasten des Halteabschnitts hinter dem Haltevorsprung erreicht.

Gemäß einer weitergehenden Ausführungsform setzt sich der ringförmige Verbindungsabschnitt radial nach innen unter Bildung eines ringförmigen Kragens fort, und stößt in der montierten Lage an die dem Anschlussstück abgekehrten Stirnseite des Haltevorsprungs des Anschlussteils an. Damit wird die axiale Lage der Spannhülse relativ zum Anschlussteil festgelegt. Die Spannhülse kann sich nicht mehr weiter in Richtung auf das Anschlussstück bewegen. In der entgegengesetzten Richtung wird die Spannhülse durch deren hakenförmigen Rastfortsatz am Halteabschnitt und den Haltevorsprung am Anschlussteil gehalten. Die Spannhülse befindet sich daher stets an der vorgesehenen Position, in der der Klemmabschnitt gut von der Überwurfmutter zusammengedrückt werden kann.

Es kann vorgesehen werden, dass der radial nach innen weisende Rastfortsatz der Spannhülse sich auf seiner Innenseite in Richtung auf das Anschlussstück des Anschlussteils konisch erweitert. Damit wird ein Aufschieben der Spannhülse auf das Anschlussteil erleichtert. Alternativ oder zusätzlich kann vorgesehen werden, dass der radial nach außen weisende Haltevorsprung des Anschlussteils sich auf seiner dem Anschlussstück abgekehrten Seite in Richtung auf den Rohrstutzen konisch verjüngt. Dadurch wird die Montage der Spannhülse insbesondere bei festeren Materialien der Spannhülse weiter vereinfacht.

Das Anschlussstück ist in der Regel standardisiert oder genormt ausgebildet. Daran schließt sich das Außengewinde häufig über ein Rohrstück an, an dem sich in axialer Richtung weiter hinten das Außengewinde und der Rohrstutzen befinden. Gemäß einer weiteren Ausführungsform der Erfindung ist vorgesehen, dass sich in axialer Richtung zwischen dem Anschlussstück und dem Außengewinde ein Werkzeugansatz für ein Konterwerkzeug befindet. Dieser Werkzeugansatz kann beispielsweise aus gegenüberliegenden parallelen Abflachungen zum Ansatz eines Maul- oder Gabelschlüssels bestehen. Dann kann die Überwurfmutter besonders fest angezogen werden.

Aus welchen Materialien die Schlauchanbindung besteht, ist grundsätzlich beliebig. Insbesondere für die Anwendung in der Lebensmittelindustrie, der Pharmaindustrie, der Chemie, der Biochemie oder der Medizintechnik ist es günstig, wenn die einzelnen Bestandteile sterilisierbar und autoklavierbar sind. Es ist daher vorgesehen, dass das Anschlussteil und die Überwurfmutter aus Metall, beispielsweise aus Edelstahl, oder aus Kunststoff bestehen.

Grundsätzlich kann auch die Spannhülse aus Metall, beispielsweise aus Edelstahl, bestehen. Die Spannhülse besteht vorzugsweise aus einem nachgiebigen Material und insbesondere aus einem nachgiebigen Kunststoff, wie zum Beispiel Polyoxymethylen, das die gewünschten Eigenschaften in Bezug auf die Nachgiebigkeit, Festigkeit und Temperaturbeständigkeit aufweist.

Für einen besonders guten Zusammenhalt der Schlauchanbindung ist es gemäß der Erfindung weiterhin vorgesehen, dass die Überwurfmutter an ihrem dem Innengewinde abgekehrten Ende einen radial nach innen weisenden und mindestens teilweise umlaufenden Vorsprung aufweist, dessen Innendurchmesser größer ist als oder gleich groß ist wie der Außendurchmesser des anzubindenden Schlauchs und kleiner ist als der Außendurchmesser des ihm zugewandten Endes des Klemmabschnitts der Spannhülse. Die Spannhülse kann sich dann nur noch bis zu diesen Vorsprung ausdehnen. Weitere Ausdehnungen werden zuverlässig verhindert.

Die Erfindung wird im Folgenden anhand der schematischen Zeichnung näher erläutert. Es zeigen:
- Fig. 1:: im Längsschnitt das Anschlussteil gemäß der Erfindung,
- Fig. 2:: das Anschlussteil in perspektivischer Darstellung,

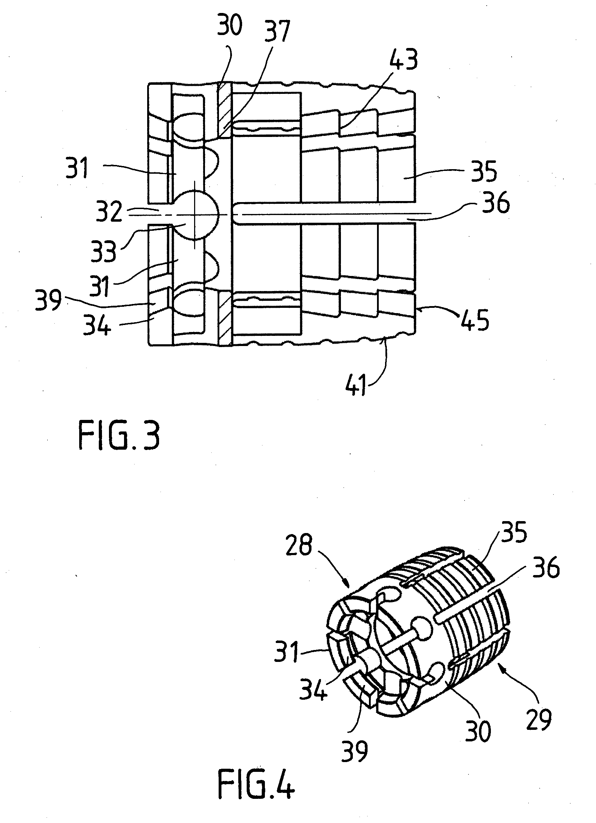

- Fig. 3:: im Längsschnitt die Spannhülse gemäß der Erfindung,
- Fig. 4:: die Spannhülse in perspektivischer Darstellung,

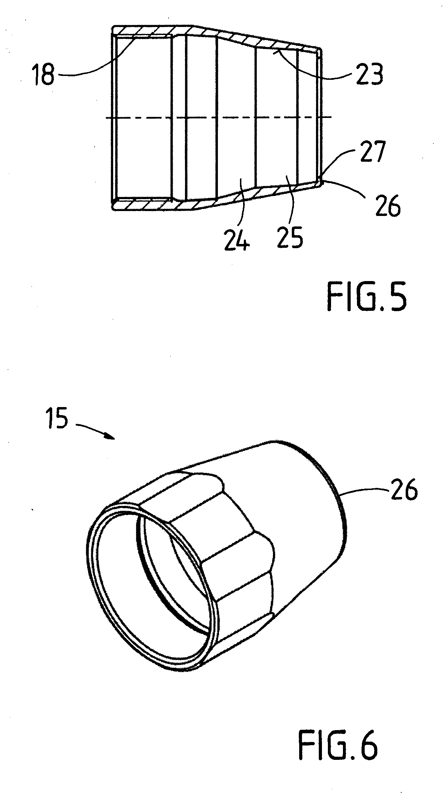

- Fig. 5:: im Längsschnitt die Überwurfmutter gemäß der Erfindung,
- Fig. 6:: die Überwurfmutter in perspektivischer Darstellung, und
- Fig. 7:: im Längsschnitt die Schlauchanbindung in der montierten Lage.

Die in der Zeichnung dargestellte Schlauchanbindung für einen Schlauch 11 ist im Querschnitt kreisringförmig ausgebildet und weist ein Anschlussteil 12 auf, das an seinem einem Ende ein standardisiertes Anschlussstück 13 aufweist. Das Anschlussstück 13 ist in bei der in der Zeichnung dargestellten Ausführungsform als Tri-Clamp Anschluss ausgebildet. Weiterhin ist eine Spannhülse 14 und eine Überwurfmutter 15 vorgesehen, um den Schlauch 11 an dem Anschlussteil 12 dichtend zu halten.

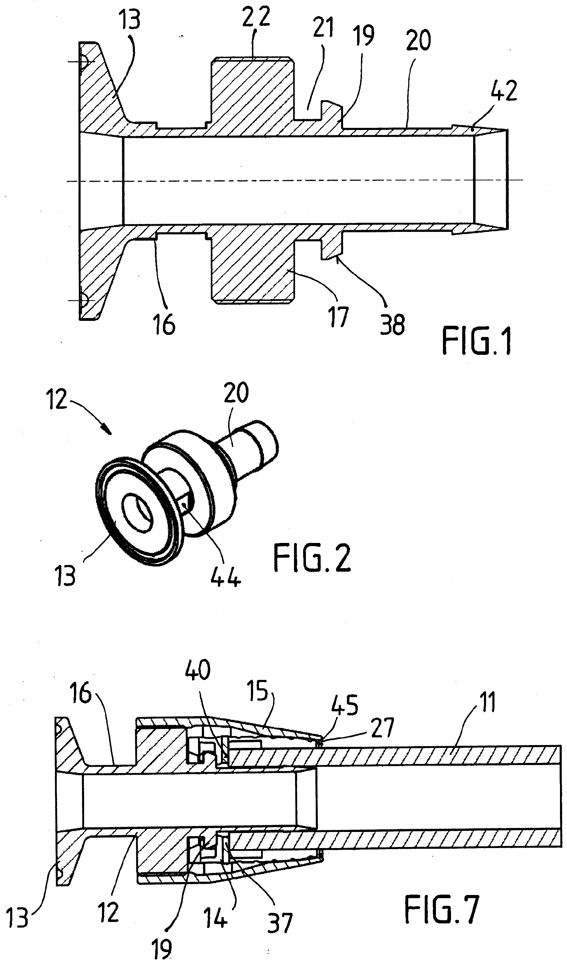

Das Anschlussteil 12 ist auf dessen Innenseite rohrförmig zum Durchleiten eines Mediums ausgebildet. Das Anschlussteil weist weiterhin in axialer Reihenfolge, in der Figur 7 von links nach rechts, das endständige Anschlussstück 13, einen freien Rohrabschnitt 16, einen umlaufenden radialen nach außen weisenden Gewindevorsprung 17 mit einem Außengewinde 22, einen umlaufenden radial nach außen weisenden Haltevorsprung 19 und einen Rohrstutzen 20 auf. Zwischen dem Gewindevorsprung 17 und dem Haltevorsprung 19 ist ein Freiraum 21 vorhanden.

Die Überwurfmutter 15 weist ein Innengewinde 18 auf, das auf das Außengewinde 22 passt. An ihrem dem Innengewinde 18 abgekehrten Endabschnitt ist die Innenwandung 23 der Überwurfmutter 15 konisch in Richtung von dem Innengewinde 18 weg verjüngend ausgebildet. Die konische Innenwandung 23 kann dabei gerade verlaufen oder Bereiche 24, 25 mit unterschiedlichen Steigungen aufweisen. Weiterhin weist die Überwurfmutter 15 an ihrem dem Innengewinde 18 abgekehrten Ende 26 einen radial nach innen weisenden Vorsprung 27 auf, der einen Absatz zu der konischen Innenwandung bildet. Der Innendurchmesser des freibleibenden Querschnitts ist dabei größer als oder gleich groß wie der Außendurchmesser des anzubindenden Schlauchs 11.

Die Spannhülse 14 weist einen Halteabschnitt 28 auf, der in der montierten Lage in Richtung auf das Anschlussstück 13 weist. Auf der gegenüberliegenden Seite ist ein Klemmabschnitt 29 vorhanden, der über einen ringförmigen Verbindungsabschnitt 30 mit dem Halteabschnitt 28 verbunden ist. Der Halteabschnitt 28 setzt sich in Umfangsrichtung aus mehreren Haltezungen 31 zusammen, die jeweils einen Spalt 32 in Umfangsrichtung zueinander begrenzen. Dadurch ist der Halterabschnitt 28 nachgiebig und kann insbesondere nach außen aufgespreizt werden. Es können im Bereich der Anlenkung der einzelnen Haltezungen 31 an den Verbindungsabschnitt 30 Erweiterungen 33 des Spalts 32 vorgesehen werden, wodurch die Nachgiebigkeit weiter erhöht wird.

An ihrem vorderen, freien Ende weisen die Haltezungen 31 radial nach innen weisende Rastfortsätze 34 auf, die bei der Montage der Rohranbindung über den Haltevorsprung 19 des Anschlussteils 12 gleiten und in den Freiraum 21 einrasten. Die axiale Länge der Rastfortsätze 34 ist dazu kleiner als die axiale Länge des Freiraums 21 zwischen dem Gewindevorsprung 17 und dem Haltevorsprung 19.

Der Klemmabschnitt 29 setzt sich in Umfangsrichtung ebenfalls aus einzelnen Klemmzungen 35 zusammen, die zwischen sich einen Spalt 36 begrenzen. Auch hier können im Bereich der Anlenkung zum Verbindungsabschnitt 30 Erweiterungen vorgesehen werden, die in der Zeichnung nicht dargestellt sind. Durch diese beabstandeten Klemmzungen 35 ist der ansonsten ringförmige Klemmabschnitt 29 nachgiebig und kann insbesondere zusammengedrückt werden.

Der Verbindungsabschnitt 30 der Spannhülse 14 setzt sich auf seiner Innenseite unter Bildung eines umlaufenden Kragens 37 weiter nach innen fort. Der Innendurchmesser des Kragens 37 ist größer als der Außendurchmesser des Rohrstutzens 20 und kleiner als der Durchmesser des ihm in der montierten Lage zugewandten Haltevorsprungs 19. Dadurch kann die Spannhülse 14 nicht beliebig weit auf das Anschlussteil 12 geschoben werden.

Zum Montieren der Schlauchanbindung an einem Schlauch wird zunächst die Spannhülse 14 mit ihren Halteabschnitt 28 über den Rohrstutzen 20 des Anschlussteils 12 geschoben, bis die Haltezungen 31 hinter dem Haltevorsprung 19 einrasten. Für eine vereinfachte Montage können die einander zugewandten Stirnseiten des Haltevorsprungs 19 und der endständigen Rastfortsätze 34 jeweils eine konische Anlauffläche 38, 39 aufweisen. Dadurch werden die Haltezungen leichter aufgespreizt, so dass die Spannhülse 14 in einfacher Weise bis zum Anschlag des inneren Kragens 37 an den Haltevorsprung 19 aufgeschoben werden kann. Die hakenförmigen Rastfortsätze 34 der Haltezungen 28 rasten dann in den Freiraum 21 zwischen dem Gewindevorsprung 17 und dem Haltevorsprung 19 hinter diesen ein. Die Klemmhülse 14 ist danach axial und verliersicher an dem Anschlussteil 12 gehalten.

In dieser Lage umgibt der Klemmabschnitt 29 den Rohrstutzen 20 des Anschlussteils 12 unter Belassung eines im Querschnitt ringförmigen Freiraums zumindest teilweise. Der Innendurchmesser des Klemmabschnitts 29 ist dabei größer als oder zumindest gleich groß wie der Außendurchmesser des einzuführenden Schlauchabschnitts. Der Außendurchmesser des Rohrstutzens 20 ist an den Innendurchmesser des Schlauchs 11 angepasst.

In diesen Freiraum wird anschließend das Schlauchende des anzubindenden Schlauchs 11 eingeführt, bis dessen vordere Stirnfläche 40 an den inneren Kragen 37 der Spannhülse 14 anschlägt. Vorher ist die Überwurfmutter 15 mit ihrem dem Innengewinde 18 abgekehrten Ende 26 zuerst auf den Schlauch 11 aufgeschoben worden. Die Überwurfmutter 15 wird anschließend zunächst über den Klemmabschnitt 29 bis zum Außengewinde 22 des Gewindevorsprungs 17 geschoben und anschließend festgedreht. Der Außendurchmesser des Außengewindes 22 ist dabei mindestens gleich groß wie oder größer als der größte Außendurchmesser der Spannhülse 14.

Beim Anziehen der Überwurfmutter 15 bewegt sich diese weiter in Richtung auf das Anschlussstück 13. Dabei gelangt die konische Innenfläche 23 in Kontakt mit den korrespondierenden Außenflächen 41 der Klemmzungen 35 des Klemmabschnitts 29 der Spannhülse 14 und drückt diese radial nach innen in Richtung auf den in den Freiraum eingeführten Schlauch 11. Dadurch wird der flexible Schlauch 11 fest und dichtend auf den Rohrstutzen 20 gedrückt. Die äußere Oberseite des Klemmabschnitts 29 kann dabei in Richtung auf die freien Enden der diesen bildenden Klemmzungen 35 sich konisch verjüngend ausgebildet sein. Damit wird ein gutes Abgleiten der Klemmzungen 35 innerhalb der Überwurfmutter 15 auf deren konischen Innenfläche 23 bewirkt.

Nach dem Festdrehen der Überwurfmutter 15 ist der Schlauch fest mit dem Anschlussteil 12 verbunden. Für einen besseren Halt kann der Rohrstutzen an seinem freien Ende eine umlaufende äußere Rastnase 42 aufweisen, die ein Abziehen des Schlauches 11 vom Rohrstutzen 20 erschwert. Entsprechende Rastnasen 43 können auf der Innenseite der Klemmzungen 35 vorhanden sein, um den Schlauch 11 besser in axialer Richtung festzuhalten.

Weiterhin kann auf der Außenfläche des freien Rohrabschnitts 16 ein Werkzeugansatz für ein Konterwerkzeug vorhanden sein, um die Überwurfmutter gut und fest anziehen zu können. Bei dem dargestellten Ausführungsbeispiel umfasst der Werkzeugansatz zwei parallele und gegenüberliegende abgeflachte Flächen 44, an die ein Maulschlüssel angesetzt werden kann. Die Überwurfmutter 15 kann ebenfalls mindestens zwei gegenüber liegenden Abflachungen aufweisen, damit die Überwurfmutter mit einem Maulschlüssel fest angezogen und auch wieder gelöst werden kann.

Die Überwurfmutter 15 und das Anschlussteil 13 bestehen in bevorzugter Weise aus Edelstahl oder Kunststoff. Die Spannhülse besteht aus einem nachgiebigen Kunststoff hoher Festigkeit, beispielsweise aus POM (Polyoxymethylen). Bei einem Dauerbetrieb der Schlauchanbindung unter hohem Druck und bei höheren Temperaturen kann es vorkommen, dass der Kunststoff anfängt zu kriechen. Dies hat zur Folge, dass die Spannhülse 14 sich verformt und sich die Klemmzungen 35 in Richtung ihr auf freies Ende ausdehnen und bewegen. Um dies zu verhindern, ist der radial nach innen weisende Vorsprung 27 an dem hinteren freien Ende 26 der Überwurfmutter 15 vorhanden, an den die freien Stirnflächen 45 der Klemmzungen 35 anstoßen. Ein weiteres Ausdehnen der Klemmzungen 35 und somit der Spannhülse 14, das zu einer Lockerung der Klemmverbindung des Schlauchs 11 an dem Rohrstutzen 20 und somit zu einer Undichtigkeit führen kann, wird dadurch zuverlässig vermieden.

Die Herstellung der Überwurfmutter 15 und des Anschlussteils 12 kann in bekannter Weise durch spanende Bearbeitung erfolgen. Die Spannhülse 14 kann als Drehteil oder als Spritzgussteil mit ausreichender Genauigkeit hergestellt werden. Es sind dann nur noch wenige oder keine Nachbearbeitungen erforderlich. Da die Spannhülse keine tragende Funktion aufweist, sind Fertigungstoleranzen für die Klemm- und Haltefunktion unschädlich. Weiterhin kann die Spannhülse 14 in einfacher Weise vom Anschlussteil 12 durch Aufspreizen der Haltezungen 31 wieder gelöst werden. Eine Wiederverwendung der aus Metall (Edelstahl) oder Kunststoff bestehenden Überwurfmutter 15 oder des Anschlussteils 13 ist daher möglich.

## Patentansprüche

1. Schlauchanbindung mit einem Anschlussteil (12), einer Spannhülse (14) und einer Überwurfmutter (15), die die Spannhülse (14) in der montierten Lage zumindest teilweise umgibt und mit dieser zusammenwirkt derart, dass bei der Drehung der Überwurfmutter (15) in eine Richtung die Spannhülse (14) den Schlauch (11) mit dem Anschlussteil (12) dichtend verbindet, welches Anschlussteil (12) einen Rohrstutzen (20) aufweist, der mit einem Anschlussstück (13) des Anschlussteils (12) verbunden ist und auf dessen freies Ende der anzubindende Schlauch (11) aufsteckbar ist, **dadurch gekennzeichnet, dass** die Spannhülse (14) einen Klemmabschnitt (29) und einen diesem gegenüber liegenden Halteabschnitt (28) aufweist, dass der Halteabschnitt (28) und der Klemmabschnitt (29) über einen ringförmigen Verbindungsabschnitt (30) der Spannhülse (14) miteinander verbunden sind, dass der Halteabschnitt (28) und der Klemmabschnitt (29) mehrere in Umfangsrichtung nebeneinander liegende und sich von dem Verbindungsabschnitt (30) weg erstreckende Haltezungen (31) beziehungsweise Klemmzungen (35) aufweisen, welcher Halteabschnitt (28) an dem freien Enden jeder Haltezunge (31) einen radial nach innen weisenden Rastfortsatz (34) aufweist, der über einen korrespondierenden radialen nach außen weisenden Haltevorsprung (19) am Anschlussteil (12) einrastet derart, dass der Halteabschnitt (28) in axialer Richtung am Anschlussteil (12) in einer Lage gehalten ist, in der der Klemmabschnitt (29) den Rohrstutzen (20) unter Belassung eines ringförmigen Freiraums zumindest bereichsweise umgibt, in welchen Freiraum der anzubindende Schlauch (11) einführbar ist, und dass das Anschlussteil (12) in axialer Richtung zwischen dem radialen Haltevorsprung (19) und dem Anschlussstück (13) ein Außengewinde (22) aufweist, auf das die Überwurfmutter (15) aufschraubbar ist, die eine sich konisch verjüngende Innenfläche (24) aufweist, die den Klemmabschnitt (29) zusammenpresst, um den Schlauch (11) dichtend auf dem Rohrstutzen (20) festzuklemmen.

2. Schlauchanbindung nach Anspruch 1, **dadurch gekennzeichnet, dass** sich die axialen Spalte (32) zwischen den Klemmzungen (35) und/oder den Haltezungen (31) im Verbindungsbereich zum Verbindungsabschnitt (30) erweitern.

3. Schlauchanbindung nach einem der Ansprüche 1 oder 2, **dadurch gekennzeichnet, dass** das Außengewinde (22) des Anschlussteils (12) auf einem zumindest teilweise umlaufenden radialen Gewindevorsprung (17) des Anschlussteils (12) angeordnet ist.

4. Schlauchanbindung nach Anspruch 3, **dadurch gekennzeichnet, dass** zwischen dem Gewindevorsprung (17) und dem radial nach außen weisenden Haltevorsprung (19) des Anschlussteils (12) ein axialer Abstand (21) vorhanden ist, der größer ist als die axiale Länge des radial nach innen weisenden Rastfortsatzes (34).

5. Schlauchanbindung nach einem der Ansprüche 1 bis 4, **dadurch gekennzeichnet, dass** sich der ringförmige Verbindungsabschnitt (30) radial nach innen unter Bildung eines ringförmigen Kragens (37) fortsetzt, und in der montierten Lage an die dem Anschlussstück (13) abgekehrten Stirnseite des radial nach außenweisenden Haltevorsprungs (19) des Anschlussteils (12) anstößt.

6. Schlauchanbindung nach einem der Ansprüche 1 bis 5, **dadurch gekennzeichnet, dass** der radial nach innen weisende Rastfortsatz (34) sich auf seiner Innenseite in Richtung auf das Anschlussstück des Anschlussteils konisch erweitert.

7. Schlauchanbindung nach einem der Ansprüche 1 bis 6, **dadurch gekennzeichnet, dass** der radial nach außen weisende Haltevorsprung (19) des Anschlussteils (12) sich auf seiner dem Anschlussstück (13) abgekehrten Seite in Richtung auf den Rohrstutzen (20) konisch verjüngt.

8. Schlauchanbindung nach einem der Ansprüche 1 bis 7, **dadurch gekennzeichnet, dass** sich in axialer Richtung zwischen dem Anschlussstück (13) und dem Außengewinde (22) ein Werkzeugansatz (44) für ein Konterwerkzeug befindet.

9. Schlauchanbindung nach einem der Ansprüche 1 bis 8, **dadurch gekennzeichnet, dass** das Anschlussteil (12) und die Überwurfmutter (15) aus Metall und insbesondere aus Edelstahl oder aus Kunststoff bestehen.

10. Schlauchanbindung nach einem der Ansprüche 1 bis 9, **dadurch gekennzeichnet, dass** die Spannhülse (14) aus einem nachgiebigen Material und insbesondere aus einem nachgiebigen Kunststoff oder einem nachgiebigen Metall, insbesondere Edelstahl, besteht.

11. Schlauchanbindung nach einem der Ansprüche 1 bis 10, **dadurch gekennzeichnet, dass** die Überwurfmutter (15) an ihrem dem Innengewinde (18) abgekehrten Ende (26) einen radial nach innen weisenden und mindestens teilweise umlaufenden Vorsprung (27) aufweist, dessen Innendurchmesser größer ist als oder gleich groß ist wie der Außendurchmesser des anzubindenden Schlauchs (11) und kleiner ist als der Außendurchmesser des ihm zugewandten Endes (45) des Klemmabschnitts (29) der Spannhülse (14).

## Claims

1. A hose connection having a connection piece (12), a clamping sleeve (14), and a cap nut (15) surrounding said clamping sleeve (14) in its mounted position at least partially and cooperating with the latter so that during rotation of said cap nut (15) in one direction, said clamping sleeve (14) connects said hose (11) to said connection piece (12) sealingly , where said connection piece (12) has a pipe socket (20) connected to a contact part (13) of said connection piece (12) and on the free end of which said hose (11) to be connected is slip-on, **characterised in that** said clamping sleeve (14) has a clamping portion (20) and a holding portion (28) facing the latter, that said holding portion (28) and said clamping portion (29) are interconnected via a ring-shaped junction portion (30) of said clamping sleeve (14), that said holding portion (28) and said clamping portion (29) have several adjacent clutching blades (31) respectively clamping tongues (35) extending away from said junction portion (30), where said holding portion (28) has, at the free end of each clutching blade (31), a clutching appendix (34) showing radially inwards which engages via a corresponding holding protrusion (19) radially orientated outwards on the connection piece (12) so that said holding portion (28) is held on said connection piece (12) in axial direction in a position where said clamping portion (29) surrounds said pipe socket (20) at least sectionally while maintaining a ring-shaped free space, where said hose (11) to be connected is introduce able and that said connection piece (12) has an exterior thread (22) in axial direction between said radial holding protrusion (19) and said contact part (13) on which said cap nut (15) is screwable which has a conically tapered interior surface (24) compressing said clamping portion (29) in order to sealingly lock said hose (11) on said pipe socket (20).

2. The hose connection according to claim 1, **characterised in that** axial gaps (32) between said clamping tongues (35) and/or said clutching tongues (31) expand in junction region towards said junction portion (30).

3. The hose connection according to one of claim 1 or claim 2, **characterised in that** said exterior thread (22) of said connection piece (12) is arranged on a at least partially circumferential threaded protrusion (17), radial of said connection piece (12).

4. The hose connection according to claim 3, **characterised in that** between said threaded protrusion (17) and said radially orientated outwards holding protrusion (19) of said connection part (12), there is an axial distance (21) which is bigger than axial length of said clutching appendix (34) showing radially inwards

5. The hose connection according to one of claims 1 to 4, **characterised in that** said ring-shaped junction portion (30) extends radially inwards while forming a ring-shaped collar (37) and abuts in its mounted position at the radially outwards extending holding protrusion (19) of said connection part (12) front end turned away from said contact part (13).

6. The hose connection according to one of claims 1 to 5, **characterised in that** said radially outwards showing clutching appendix (34) conically expands on its interior towards said contact part of said connection piece.

7. The hose connection according to one of claims 1 to 6, **characterised in that** said radially outwards showing holding protrusion (19) of said connection part (12) is conically tapered at its side turned away from said contact part (13), towards said pipe socket (20).

8. The hose connection according to one of claims 1 to 7, **characterised in that** a tool shoulder (44) for a locking tool is arranged in axial direction between said contact part (13) and said exterior thread (22).

9. The hose connection according to one of claims 1 to 8, **characterised in that** said connection part (12) and said cap nut (15) are made of metal and in particular of stainless steel or of plastic material.

10. The hose connection according to one of claims 1 to 9, **characterised in that** said clamping sleeve (14) is made of flexible material and in particular of flexible plastic material or flexible metal, in particular stainless steel.

11. The hose connection according one of claims 1 to 10, **characterised in that** said cap nut (159 has an at least partially circumferential protrusion (27) radially showing inwards, the interior diameter of which is bigger than or as big as the exterior diameter of said hose (11) to be connected and smaller than the exterior diameter of said clamping sleeve (14) clamping portion (29) end (45) facing said hose.

## Revendications

1. Fixation de tuyau ayant un élément de jonction (12), une douille de serrage (14) et une collerette de fixation (15) entourant la douille de serrage (14) dans la position montée au moins partiellement et coopérant avec celle-ci de sorte que la douille de serrage (14) relie le tuyau (11) à l'élément de jonction (12) de manière étanche lors de la rotation de la collerette de fixation (14), l'élément de jonction (12) présentant un embout de tube (20) relié à une pièce de jonction (13) de l'élément de jonction (12) et sur l'extrémité libre duquel le tuyaux (11) à fixer est enfichable, **caractérisé en ce que** la douille de serrage (14) présente une portion de serrage (29) et une portion de maintien (28) opposée à cette dernière, que la portion de maintien (28) et la portion de serrage (29) sont reliées via une portion de jonction (30) annulaire de la douille de serrage (14), que la portion de maintien (28) et la portion de serrage (29) présentent une pluralité de languettes de maintien (31) voire de languettes de serrage (35) juxtaposées dans la circonférence et s'étendant de la portion de jonction (30), ladite portion de maintien (28) présentant, à son extrémité libre de chacune des languettes de maintien (31) un prolongement d'enclenchement (24) radialement orienté vers l'intérieur et s'enclenchant via une saillie de maintien (19) correspondante orientée vers l'extérieur sur l'élément de jonction (12) de sorte que la portion de maintien (28) est maintenue en direction axiale sur l'élément de jonction (12) dans une position dans laquelle la portion de serrage (29) entoure au moins par zones l'embout de tube (20) en ménageant un espace libre annulaire dans lequel le tuyau (11) à fixer est escamotable et que l'élément de jonction (12) présente, en direction axiale entre la saillie de maintien (19) et la pièce de jonction (13) un filetage (22) sur lequel la collerette de fixation (15) est vissable, présentant une surface intérieure (24) en cône en s'effilant, comprimant la portion de serrage (29) afin de serrer le tuyau (11) de manière étanche sur l'embout de tube (20).

2. Fixation de tuyau selon la revendication 1, **caractérisée en ce que** l'entrefer axial (32) entre les languettes de serrage (35) et/ou les languettes de maintien (31) s'évasent dans la zone de jonction vers la portion de jonction (30).

3. Fixation de tuyau selon l'une des revendications 1 ou 2, **caractérisée en ce que** le filetage (22) de l'élément de jonction (12) est disposé sur une saillie filetée (17) au moins partiellement circonférentielle radialement de l'élément de jonction (12).

4. Fixation de tuyau selon la revendication 3, **caractérisée en ce qu'**entre la saillie filetée (17) et la saillie de maintien (19) radialement orientée vers l'extérieur de l'élément de jonction (12) est ménagée une distance axiale (21) supérieure à la longueur axiale du prolongement d'enclenchement (34) radialement orienté vers l'intérieur.

5. Fixation de tuyau selon l'une des revendications 1 à 4, **caractérisée en ce que** la portion de jonction (30) annulaire se poursuit radialement vers l'intérieur en formant une collerette (37) annulaire et, en position montée, est contiguë à la face frontale éloignée de la pièce de jonction (13) de la portion de maintien (19) radialement orientée vers l'extérieur de l'élément de jonction (12).

6. Fixation de tuyau selon l'une des revendications 1 à 5, **caractérisée en ce que** le prolongement d'enclenchement (34) radialement orienté vers l'intérieur s'évase en cône sur sa face intérieure vers la pièce de jonction de l'élément de jonction.

7. Fixation de tuyau selon l'une des revendications 1 à 6, **caractérisée en ce que** la saillie de maintien (19) radialement orientée vers l'extérieur de l'élément de jonction (12) s'évase en cône sur sa face éloignée de la pièce de jonction (13) vers l'embout de tuyau (20.

8. Fixation de tuyau selon l'une des revendications 1 à 7, **caractérisée en ce qu'**un talon d'outil (44) pour un outil de blocage est disposé en direction axiale entre la pièce de jonction (13) et un filetage (22).

9. Fixation de tuyau selon l'une des revendications 1 à 8, **caractérisée en ce que** l'élément de jonction (12) et la collerette de fixation (15) sont en métal et notamment en inox ou en matière plastique.

10. Fixation de tuyau selon l'une des revendications 1 à 9, **caractérisée en ce que** la douille de serrage (14) est constituée d'un matériau flexible et notamment d'un matériau plastique flexible ou d'un métal flexible, notamment d'inox.

11. Fixation de tuyau selon l'une des revendications 1 à 10, **caractérisée en ce que** la collerette de fixation (15) présente, à son extrémité (26) éloignée du taraudage (18), une saillie (27) orientée radialement vers l'intérieur et au moins partiellement circonférentielle dont le diamètre intérieur est supérieur ou égal au diamètre extérieur du tuyau (11) à fixer et inférieur au diamètre extérieur de l'extrémité (45) orientée vers ce dernier de la portion de serrage (29) de la douille de serrage (14).
